# EUROPEAN PATENT SPECIFICATION

(11) **EP 3 269 973 B1**
(45) Date of publication and mention of the grant of the patent: **04.12.2019**
(21) Application number: 15884446.4
(22) Date of filing: 12.03.2015
(51) Int. Cl.: F03B 13/18, F03B 13/22

(54) **SYSTEM FOR EXTRACTING POTENTIAL AND KINETIC ENERGY FROM SEA WAVES**
SYSTEM ZUR EXTRAKTION VON KRAFT UND KINETISCHER ENERGIE AUS MEERESWELLEN
SYSTÈME DE CAPTATION DE L'ÉNERGIE CINÉTIQUE ET DE LA FORCE DES VAGUES DE LA MER

(43) Date of publication of application: 17.01.2018
(73) Proprietor: Perez Ramos, José Carlos, 38180 Santa Cruz de Tenerife (ES)
(72) Inventor: Perez Ramos, José Carlos, 38180 Santa Cruz de Tenerife (ES)
(74) Representative: Herrero & Asociados, S.L.
(86) International application number: PCT/ES2015/070176
(87) International publication number: WO 2016/142556

(56) References cited:
- EP-A1- 2 781 732
- WO-A2-2009/093988
- CN-A- 102 734 052
- CN-A- 103 047 085
- CN-U- 203 856 644
- GR-B- 1 002 370
- KR-A- 20100 119 741
- TW-A- 201 502 368
- US-A- 4 622 473
- US-A- 5 411 377
- US-A1- 2010 264 658
- US-B1- 7 956 479
- US-B1- 8 035 243

## Description

### Technical Field of the Invention

The present invention corresponds to the technical field of systems for extracting potential and kinetic energy from sea waves, specifically those systems located in offshore marine constructions and having an operation based on a piston causing the movement of a pressurized liquid through a turbine.

### Background of the Invention

Systems and apparatus which aim to obtain energy from clean and renewable resources, such as the case of obtaining potential and kinetic energy from sea waves, are being progressively developed today.

Mechanisms existing in the state of the art for harnessing energy from sea waves can be classified according to their operation, i.e., if they relate to a piston-type, tubular-type or oscillating operation, according to their location, i.e., if they are floating, anchored or secured to marine constructions such as docks, piers,... generating electric energy directly or through the production of pressurized air or water for causing the movement of a turbine which generates electricity, and finally according to the mode for transporting the generated energy to the site of consumption, which can be by means of underwater cables or by means of the land power line itself in the case of systems coupled to docks or piers.

These mechanisms existing today are usually systems in which a large part of the mechanism is submerged, with the drawbacks that this entails. When they are located offshore, they require underwater cables transporting the energy to the coastline, so the entire process becomes more expensive.

Some systems using mechanisms which produce energy through the movement of a piston generating the displacement of a liquid, which can be the sea water itself that, at the end, leads to the erosion and destruction of the elements of the system.

Another problem of the systems existing in the state of the art is that the buoys or bobbing elements must be adjusted, according to the sea level, to a wide-ranging travel in order to contemplate the different possible tide levels, or in the worst case scenario, these elements must be adjusted as said levels change. This involves constructions that are larger than what is actually needed and causes, at the same time, less precision in the ranges of the buoy, reducing system productivity.

Likewise, the performance of these current systems depends greatly on the direction of attack of the waves being the one that is suitable for the location of the buoy.

Reference patent documents ES2456190-A1, ES2234419-B1 and ES0484264-A1 can be mentioned as an example of the state of the art.

Reference patent document ES2456190-A1 relates to a device for collecting and generating energy from waves comprising at least one chamber which is a tank that is open in the upper part thereof and partially closed in the lower part thereof, which chamber incorporates an opening such that the water level thereof varies due to the action of the water on the outside; and where said chamber houses a turbine or another mechanism harnessing energy from the fluid when it enters and leaves the chamber through the opening existing in the lower part thereof, acting on a shaft so that it always rotates in the same direction and transmits rotational energy to an electric energy-generating system made up of a gearbox, a flywheel and an electric generator.

In this case, the electric energy-generating system is arranged on the surface of the sea, but the turbine to which it is connected and through the movement of which the rotational energy sent to said system is generated, is completely submerged and therefore exposed to wear that arises due to continuous contact with the seabed.

Reference patent document ES2234419-B1 relates to an installation for producing energy through sea waves, having a structure that is basically made up of a buoy which must have sufficient buoyancy to drive the hydraulic piston to which it has been connected through a system of marine cables or robes and pulleys that will operate said piston.

In this patent document, the entire structure is submerged below the sea level, so the mechanisms are fully exposed to marine-related attack including the adhesion of marine algae and lichens, which thereby hinders operation, and at the same time makes installation maintenance difficult.

Reference patent document ES0484264-A1 relates to an apparatus for harnessing hydraulic power from the sea, comprising a frame that is secured, held or heavily ballasted to the seabed, the chassis of which involves one or more rotating shafts with retention to receive, retain and transmit the rotational force received by escape pinions having a support point for ascending cables attached to buoys on the surface of the sea, the purpose of which consists of harnessing the force from all the wave crests, these having a different size in height and width, the force arising from the difference in the water level between the high part and the low part of the wave crests, in relation to the support point of the cable with the pinion assembled the drive shaft, this being at an intermediate point between the water level and the seabed. Said buoys are anchored at different distances from said sufficiently long shafts, so that when the waves pass, there will always be several buoys sending the force to the pinion through the support point as soon as they receive same from the waves, causing the drive shaft to rotate, all the cables of the buoys having at their lower end a counterweight to facilitate the quick recovery thereof as they move up, the recovery of which does not operate the drive shafts due to the existence thereon of escape means, the counterweight being able to be replaced with a buoy having a smaller volume located between two bodies of water in the opposite part of the pinion at which the support point is located, as an element compensating for the recovery.

In the case of this last patent document, it can be seen that most elements involved in energy generation are arranged below the sea level. The gears specifically, working under the surface of the sea, suffer significant deterioration which leads to greater repair and maintenance needs, and therefore low system performance. Likewise, it is seen that the buoys must be located at different heights with respect to the shafts, such that there will always be a buoy on which the train of waves acts, but this means that there is always a percentage of buoys which are not acted on, so the productivity is rather low.

On the other hand, patent US8035243B1 relates to an onshore hydrokinetic system that is capable of harnessing energy from water waves by employing a plurality of specially designed floats, whereby a summation of intrinsic water wave forces is exploited.

Therefore, it can be said that all the elements or part of the elements of most existing systems are submerged, so the productivity thereof is negatively affected given that they require major and more frequent maintenance tasks.

Furthermore, these maintenance tasks are cumbersome since the elements are arranged below the sea level, so there is a need to refloat them or perform repairs by means of underwater equipment, which is very expensive.

### Description of the Invention

The system for extracting potential and kinetic energy from sea waves proposed herein is of the type located in offshore marine constructions and having an operation based on a piston causing the movement of a pressurized liquid through a turbine.

This system for extraction comprises at least one extraction unit formed by a supporting structure suspended from the marine construction, fixed at the top to a first holding platform and closed at the bottom by means of a lower base, and an energy-generating mechanism located inside the supporting structure.

Said energy-generating mechanism comprises a half-submerged buoy in the lower part thereof, connected by means of a frame to a closed-circuit pumping mechanism.

Likewise, the system for extraction further comprises a turbine and respective accumulator tank and regulator tank connected to the pumping mechanism of the at least one extraction unit and located on a second machine supporting platform which is located above the first holding platform and fixed at the top to the marine construction.

Furthermore, the suspended supporting structure has an automatic adjustment mechanism for adjusting the height and waterline of the buoy which keeps the rest of the energy-generating mechanism above sea level, by means of the displacement of the first holding platform with respect to the second supporting platform.

According to the invention, the suspended supporting structure comprises a series of tubular bodies arranged around a central area, preferably the suspended supporting structure is formed by six tubular bodies arranged in the shape having a hexagonal section.

According to the invention, the automatic adjustment mechanism for adjusting the height and waterline of the buoy comprises a series of guide elements fixed at the top to the second supporting platform and each of them being located inside one of the tubular bodies of the supporting structure, where at least two of said guide elements are furthermore threading elements to be threaded on the corresponding tubular bodies. Said threading elements comprise in the upper part thereof gears interconnected with one another and with a central gear by means of a first transmission chain, where the central gear is connected to a motor of the system, controlled by a program for automatically adjusting the buoyancy of the buoy.

According to a preferred embodiment, the closed-circuit pumping mechanism comprises a vertical piston secured by means of a bearing to a push rod fixed to the upper part of the frame connected to the buoy. The movement of this buoy and the frame displace the push rod which in turn displaces the piston inside a pressurized chamber by means of a first upward movement which causes the chamber to be filled up with the liquid from the regulator tank to which it is connected by first connection means, and a second downward movement causing the chamber to be emptied by discharging the liquid to the accumulator tank through second connection means. Both tanks are connected to one another by means of a control valve controlling the passage of the liquid from the accumulator tank to the regulator tank through the turbine.

According to a preferred embodiment, these first and second connection means between the pressure chamber and said regulator tank and accumulator tank, respectively, are formed by respective hoses each connected to the corresponding tank, respective rigid pipes connecting, in each case, one of said hoses with an inlet and outlet duct of the pressure chamber and, respective check valves. Therefore, the valve connected in the first connection means allows circulation of the liquid to the pressure chamber and the valve connected in the second connection means allows circulation to the regulator tank.

According to a preferred embodiment, the displacement of the buoy comprises guiding means of the energy-generating mechanism.

According to a preferred embodiment, these guiding means of the energy-generating mechanism are formed by side bearings for guiding the buoy with respect to the supporting structure and guide rings of the frame thereof.

Likewise, according to another preferred embodiment, said guiding means comprise a cylindrical space in the central area of the push rod with a guide rod, secured to the first holding platform, sliding therein. This guide rod may or may not be complementary to the guiding means defined above.

According to a preferred embodiment, the energy-generating mechanism comprises securing means formed by clamps for securing to the supporting structure.

According to a preferred embodiment, the extraction unit comprises safety means formed by dampeners located both in the base of the supporting structure, in the area of contact thereof with the buoy, and on a support surface fixed in the lower part of the pressure chamber of the piston, in the area of contact thereof with the buoy.

According to another aspect, the system for extracting potential and kinetic energy from sea waves comprises at least one independent module formed by three extraction units arranged in a triangle, where the central gears of said three units are connected by a second transmission chain, one of said central gears being connected to the motor controlled by a program for automatically adjusting the buoyancy of the buoy.

According to a preferred embodiment, the turbine of the system is connected to energy storage means.

According to another preferred embodiment, the turbine of the system is connected to a nearby power grid.

According to a preferred embodiment, the liquid of the closed-circuit pumping mechanism is a lubricant and an antioxidant.

A significant improvement over the state of the art is obtained with the system for extracting potential and kinetic energy from sea waves proposed herein.

This is due to the fact that the supporting structure and the mechanism are specially designed for being installed in a suspended manner in oil platforms, oceanographic laboratory,...and despite being designed to be located offshore, it does not require underwater cables for transporting the generated energy since the objective thereof is to use said energy to supply to the oceanic infrastructure itself.

Another possibility is when it is installed in a suspended manner in the lower parts of bridges located over the sea. In this case, the energy-generating mechanism is connected to the land power line itself.

Both possibilities are therefore contemplated, where it constitutes a simple solution that does not involve significant investments in both cases.

In the case of marine platforms, they have a drawback since they require supply means that are usually powered by diesel, causing dependency, expenditure and supply problem due to the need to transport same through tankers. The system for extracting potential and kinetic energy from sea waves proposed herein is a highly advantageous system in this situation since it is a completely autonomous system which produces the energy required for these marine platforms, thereby supplying to them all the energy they require.

Likewise, since the system works with a closed-circuit pumping mechanism and the liquid used is a lubricant and an antioxidant, conservation of the elements working under friction, such as the piston and pressure chamber, is assured. Since it is a closed circuit, the liquid is recovered and only replaced once a year or when recommended by the manufacturer.

Furthermore, this system incorporates an automatic adjustment mechanism for adjusting the height and waterline of the buoy which positions said waterline of the buoy according to the tides, optimizing the operation thereof. This possibility for adjusting the height also allows manually lifting the buoy above the waterline for transfers and maintenance operations, so these are performed in a simpler and quicker manner, where the time periods are cut short and the system is inoperative for a shorter time.

Another advantage of the adjustment mechanism for adjusting the height and waterline of the buoy is that significant displacement lengths of the buoy are not required because the height is regulated and there is not a need for travel from the maximum possible height for high tide to the minimum height in a low tide level, as occurs today. Therefore, the supporting structure is not too long and does not weigh too much.

Likewise, by arranging the half-submerged buoy in the lower most position of the system, the rest of the elements thereof can be arranged above sea level, wear due to tides and attacks due to the adhesion of lichens and algae thereby being prevented. The operation and maintenance of the elements of the system are thereby improved.

### Brief Description of the Drawings

In order to aid to better understand the features of the invention according to a preferred practical embodiment thereof, a series of drawings in which the following has been depicted with an illustrative and non-limiting character is provided as an integral part of said description:
Figure 1 shows a section view of the system for extracting potential and kinetic energy from sea waves, for a first preferred embodiment of the invention.
Figure 2 shows a plan view of the system for extracting potential and kinetic energy from sea waves, for a first preferred embodiment of the invention.
Figure 3 shows a plan view of the system for extracting potential and kinetic energy from sea waves, for a second preferred embodiment of the invention.
Figure 4 shows a view of section A-A' of the system for extracting potential and kinetic energy from sea waves, for a second preferred embodiment of the invention.
Figure 5 shows a view of section A-A' of the system for extracting potential and kinetic energy from sea waves in the maintenance or transport position, for a second preferred embodiment of the invention.

### Detailed Description of a Preferred Embodiment of the Invention

In view of the drawings that have been provided, it can be seen how in a first preferred embodiment of the invention, the system for extracting potential and kinetic energy from sea waves, of the type located in offshore marine constructions and having an operation based on a piston 2 causing the movement of a pressurized liquid 36 through a turbine 10 proposed herein, comprises an extraction unit 1 formed by a supporting structure 3 suspended from the marine construction and an energy-generating mechanism 7 located inside the supporting structure 3.

In this first preferred embodiment of the invention, the marine construction in which the system for extraction is located is a sea bridge, the system being fixed in a suspended manner below one of the lower areas thereof.

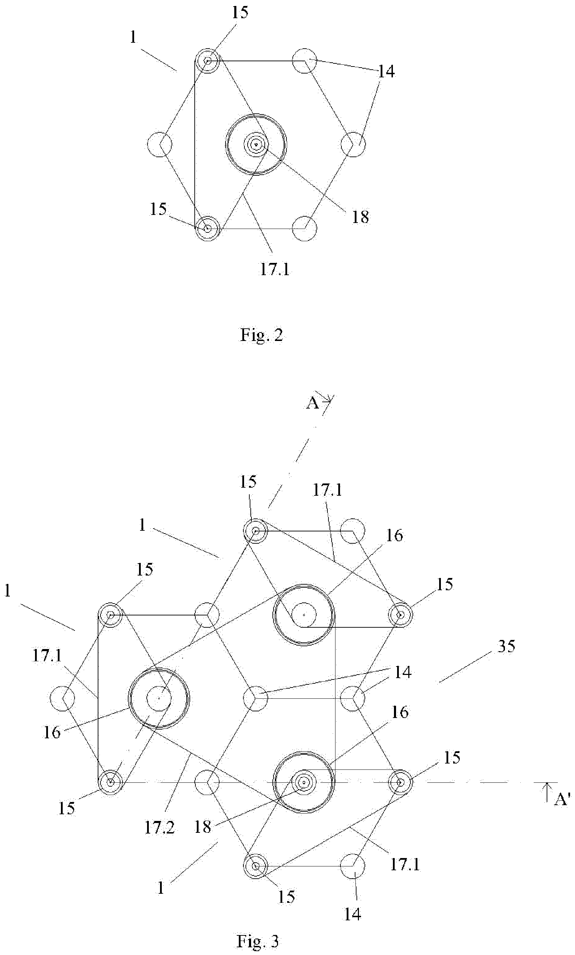

The supporting structure 3 of the extraction unit 1 comprises a series of tubular bodies 4 arranged around a central area, which in this first preferred embodiment of the invention as shown in Figure 2, are six tubular bodies 4 arranged in the shape having a hexagonal section. This supporting structure 3 is fixed at the top to a first holding platform 5.1 and closed at the bottom by means of a lower base 6.

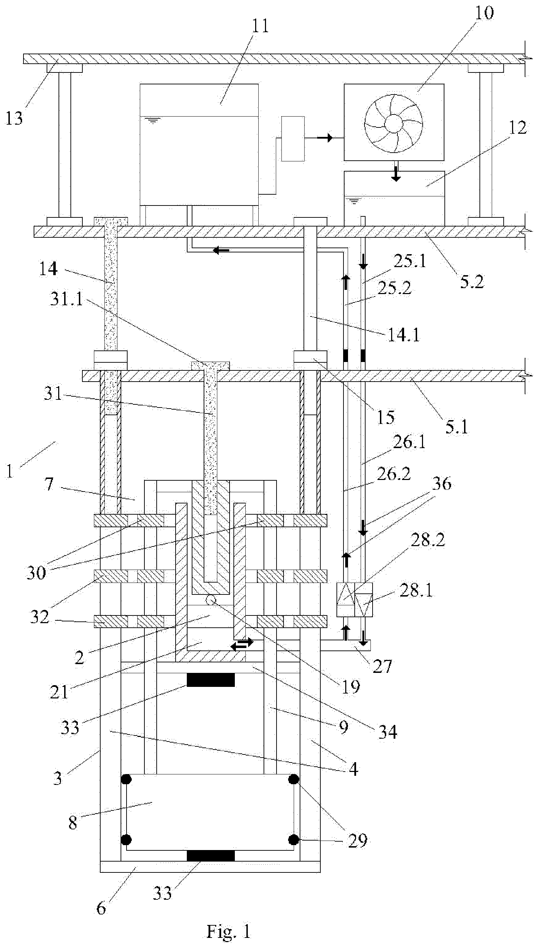

Likewise, as can be seen in Figure 1 the energy-generating mechanism 7 comprises a half-submerged buoy 8 in the lower part thereof, connected by means of a frame 9 to a closed-circuit pumping mechanism. In this first preferred embodiment of the invention, said closed circuit uses a lubricant 36 and an antioxidant.

The system for extraction in turn comprises a turbine 10 and respective accumulator tank 11 and regulator tank 12 connected to the pumping mechanism of the extraction unit. Both the turbine 10 and the tanks 11, 12 are located on a second machine supporting platform 5.2 which is located above the first holding platform 5.1 and fixed at the top to the marine construction 13.

Furthermore, the suspended supporting structure 3 has an automatic adjustment mechanism for adjusting the height and waterline of the buoy 8 which keeps the rest of the energy-generating mechanism 7 above sea level, by means of the displacement of the first holding platform 5.1 with respect to the second supporting platform 5.2.

As shown in Figure 1, in this first preferred embodiment of the invention said automatic adjustment mechanism for adjusting the height and waterline of the buoy 8 is formed by a series of guide elements 14, fixed at the top to the second supporting platform 5.2 and each of them being located inside one of the tubular bodies 4 forming the supporting structure 3. Like in this first embodiment, the supporting structure 3 is formed by six tubular bodies 4, and it therefore has six guide elements 14.

In this preferred embodiment, two of said guide elements 14 are furthermore threading elements 14.1 to be threaded on the corresponding tubular bodies 4.

As can be seen in Figure 2, these two threading elements 14.1 have in the upper part thereof gears 15 which are interconnected with one another and with a central gear 16 by means of a first transmission chain 17.1.

In turn, the central gear 16 is connected to a motor 18 of the system controlled by a program for automatically adjusting the buoyancy of the buoy 8.

As shown in Figure 1, in this first preferred embodiment of the invention the closed-circuit pumping mechanism comprises a vertical piston 2 secured by means of a bearing 19 to a push rod 20 fixed to the upper part of the frame 9 connected to the buoy 8.

The piston 2 displaces vertically inside a pressurized chamber 21 due to the movement of this buoy 8 and the frame 9 connected thereto. This movement displaces the push rod 20 which in turn displaces the piston 2 inside the pressurized chamber 21.

A first movement is therefore the upward movement of the piston 2 due to the buoy 8 moving upward as a result of the wave crest 22 acting thereon. This upward movement of the piston 2 fills the pressurized chamber 21 with the liquid 36 from the regulator tank 12 to which it is connected by first connection means.

A second movement is the downward movement of the piston 2 inside the pressurized chamber 21 due to the buoy 8 moving down as a result of the wave shape 23 acting thereon. The downward movement of the piston 2 causes the liquid 36 to be discharged through second connection means to the accumulator tank 11, the pressurized chamber 21 thereby being emptied.

Figure 1 shows the complete path for the liquid of the closed circuit of the pumping mechanism, both in the first and second movements.

The accumulator tank 11 and the regulator tank 12 are connected to one another by means of a control valve 24 controlling the passage of the liquid 36 from the accumulator tank 11 to the regulator tank 12 through the turbine 10.

In this first preferred embodiment of the invention as can be seen in Figure 1, the first connection means between the pressure chamber 21 and the regulator tank 12 are formed by a hose 25.1 connected to the regulator tank 12, a rigid pipe 26.1 connecting this hose 25.1 to an inlet and outlet duct 27 of the pressurized chamber 21 and a check valve 28.1 allowing circulation of the liquid 36 to the pressurized chamber 21.

Likewise, the second connection means between the pressurized chamber 21 and the accumulator tank 11, are formed by a hose 25.2 connected to said accumulator tank 11, a rigid pipe 26.2 connecting this hose 25.2 to the inlet and outlet duct 27 of the pressurized chamber 21 and a check valve 28.2 allowing circulation of the liquid 36 to the accumulator tank 11.

In this first preferred embodiment of the invention as can be seen in Figure 1, the buoy 8 comprises guiding means of the energy-generating mechanism 7 which are formed by side guiding bearings 29 for guiding the buoy 8 with respect to the supporting structure 3 and guide rings 30 of the frame 9 thereof. Furthermore, these guiding means comprise in the central area of the push rod 20 a cylindrical space with a guide rod 31, secured at its upper end 31.1 to the first holding platform 5.1, sliding therein.

This therefore helps the system to maintain the vertical axis, preventing deviations caused by compressive forces during impulsion movement of the energy-generating mechanism 7.

Likewise, as shown in said Figure 1 the energy-generating mechanism 7 comprises securing means formed by clamps 32 for securing to the supporting structure 3.

Likewise, for safety purposes, in order to prevent the possible waves from exceeding the maximum calculated height, in this first preferred embodiment of the invention the extraction unit 1 has safety means shown in Figure 1 and formed by dampeners 33 located in the lower base 6 of the supporting structure 3, in the area of contact thereof with the buoy 8 and, on a support surface 34 fixed in the lower part of the pressurized chamber 21 of the piston 2, in the area of contact thereof with the buoy 8.

In this first preferred embodiment of the invention, the turbine 10 of the system is connected to a nearby land power grid, having a connection socket in the sea bridge below the structure of which there is positioned in a suspended manner the system for extracting potential and kinetic energy from sea waves.

In a second preferred embodiment of the invention proposed herein, the system for extracting potential and kinetic energy from sea waves, of the type located in offshore marine constructions and having an operation based on a piston 2 causing the movement of a pressurized liquid 36 through a turbine 10, comprises a series of independent modules 35, where each of them is made up of three extraction units 1 such as those defined in the first preferred embodiment of the invention. Figure 3 shows a plan view of the arrangement of the extraction units 1 in one of these modules 35.

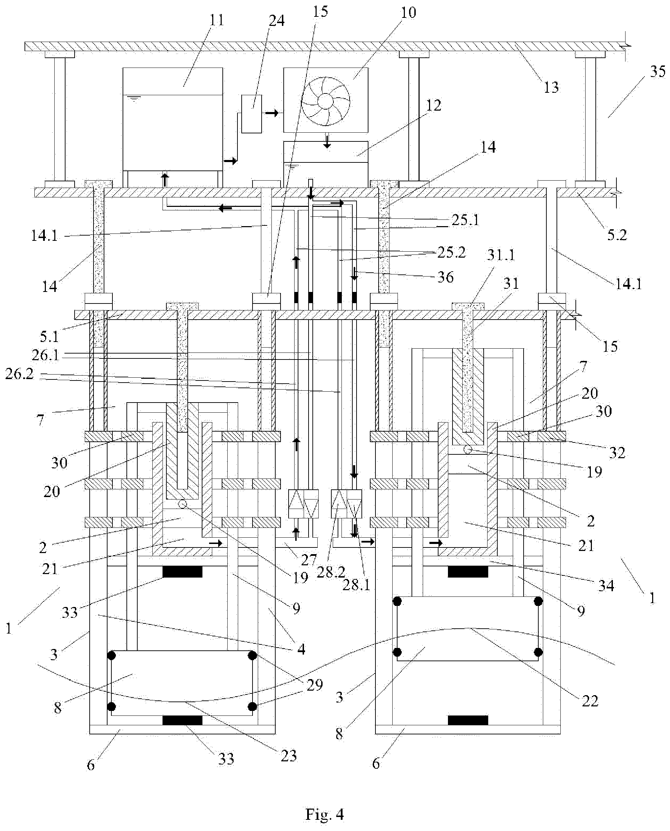

Therefore, as shown in Figure 4 each extraction unit 1 is formed, like in the first preferred embodiment of the invention, by a supporting structure 3 suspended from the marine construction 13 and an energy-generating mechanism 7 located inside the supporting structure 3.

In this second preferred embodiment of the invention, the marine construction 13 in which the system for extraction is located is a marine platform, such as an oil platform or an oceanographic laboratory, the system being fixed below the structure thereof in a suspended manner.

The supporting structure 3 of each extraction unit 1 comprises six tubular bodies 4 arranged in the shape having a hexagonal section. The extraction units 1 are arranged in a triangle, such that each extraction unit 1 shares two of these six tubular bodies 4 with each of the other two extraction units 1.

As they are connected in a triangular manner, the need to position the buoys 8 according to the attack of the waves is prevented, since as a result of the configuration thereof, the amount of energy harnessed from the waves would be the same and the highest regardless of the direction of attack.

Figure 4 shows a section A-A' of a module of the system where the sections of two of the extraction units 1 of the module 35 can be seen. As has been determined, in this second preferred embodiment of the invention each extraction unit 1 is similar to the extraction unit 1 defined in the first preferred embodiment of the invention.

Said Figure 4 shows two of the extraction units 1 in a position in which they receive the wave. In this sense, the buoy 8 of one of the units is in the low part or trough 23 of the wave and the other moves up over the crest 22 or high point of the wave.

In the case of the extraction unit 1 having the buoy 8 at the trough point 23 of the wave, since the piston 2 is connected to the buoy 8 by means of the push rod 20 fixed to the frame 9 of said buoy 8, said piston 2 was displaced downwards. This displacement discharged the liquid 36 found in the pressurized chamber 21 and it reaches, by means of the rigid pipe 26.2 and the hose 25.2 of the second connection means, the accumulator tank 11 of the system. These second means have a check valve 28.2 which only allows circulation to the accumulator tank 11.

On the other hand, at the same time the buoy 8 of the other depicted extraction unit 1 is at the wave crest point 22.

In this case, since the buoy 8 moves up over said wave crest 22, the piston 2 is displaced upwards such that the pressurized chamber 21 is filled with liquid 36 coming from the regulator tank 12 of the system through the hose 25.1 and the rigid pipe 26.1 forming the first connection means of this extraction unit 1. These first means have a check valve 28.1 which only allows passage to the pressurized chamber 21.

Both accumulator tank 11 and regulator tank 12 are connected by means of a pressure control valve 24. They furthermore have a turbine 10 located in the connection between both tanks, such that the liquid 36 circulating from one tank to another driven by the movements of the buoy 8 which displaces the piston 2, causes the passage of the liquid 36 through the turbine 10 and generates electricity. Like in the first preferred embodiment, this liquid 36 circulating in the closed circuit is a lubricant and an antioxidant.

The turbine 10 and the tanks 11, 12, of each module 35 of the system for extraction are located on a second machine supporting platform 5.2 which is located above the first holding platform 5.1 of the supporting structures 3 of the three units 1 forming the module 35.

The supporting structure 3 suspended from each extraction unit 1 has, as indicated in the first preferred embodiment of the invention, an automatic adjustment mechanism for adjusting the height and waterline of the buoy 8, keeping the generating mechanism 7 of each extraction unit 1 above sea level.

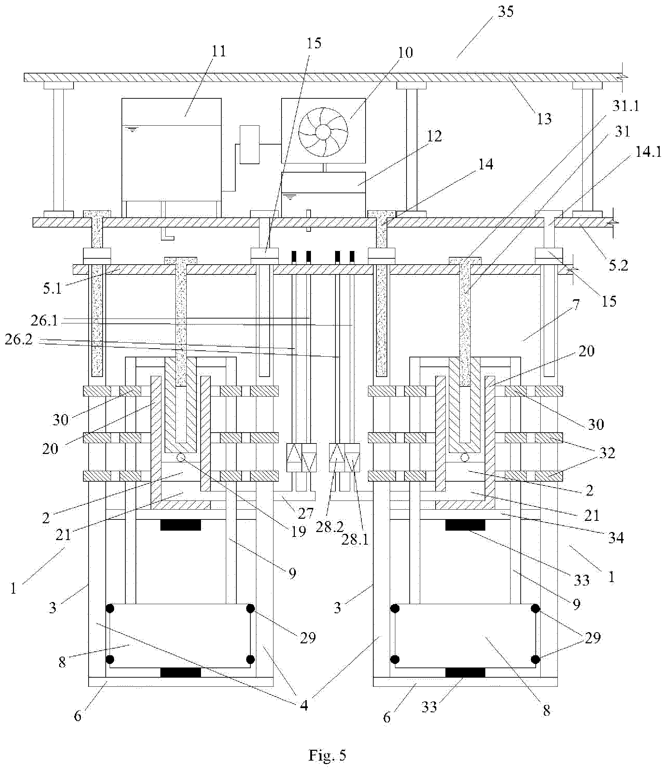

This automatic adjustment mechanism in turn allows manually lifting the supporting structures 3 of the extraction units 1 for maintenance or transfer situations such as that shown in Figure 5.

The automatic adjustment mechanism for adjusting the height and waterline of the buoy 8 is formed by six guide elements 14, fixed at the top to the second supporting platform 5.2 and each of them being located inside one of the tubular bodies 4 forming the supporting structure 3. Two of said guide elements 14 in each tubular body 4 are furthermore threading elements 14.1 to be threaded on the corresponding tubular bodies 1, where the threading elements 14.1 are thus located in tubular bodies 4 in positions that are not shared by the extraction units 1.

As shown in Figure 3, the threading elements 14.1 of each extraction unit 1 have in the upper part thereof gears 15 that are interconnected with one another and with a central gear 16 by means of a first transmission chain 17.1. Likewise, the central gears 16 of said three extraction units 1 are connected by a second transmission chain 17.2, one of said central gears 16 being connected to the motor 18 controlled by a program for automatically adjusting the buoyancy of the buoy 8.

In this second preferred embodiment of the invention, the buoy 8 of each extraction unit 1 of the module 35 comprises, like in the first defined embodiment, guiding means of the energy-generating mechanism 7, formed by side guiding bearings 29 for guiding the buoy 8 with respect to the supporting structure 3 and guide rings 30 of the frame 9 thereof. The guiding means of each extraction unit 1 also comprise a cylindrical space in the central area of the push rod 20 with a guide rod 31, secured at its upper end 31.1 to the first holding platform 5.1, sliding therein.

Likewise, as shown in Figures 4 and 5 the energy-generating mechanism 7 of each extraction unit 1 comprises securing means formed by clamps 32 for securing to the respective supporting structure 3.

Each extraction unit 1 also comprises safety means formed by dampeners 33 that are located in each extraction unit 1, in the lower base 6 of the supporting structure 3 thereof, in the area of contact thereof with the buoy 8 and, on a support surface 34 fixed in the lower part of the pressurized chamber 21 of the piston 2, in the area of contact thereof with said buoy 8, as shown in Figure 4.

In this second preferred embodiment of the invention, the turbine 10 of the system is connected to storage means of the system from which the required energy is provided to the marine platform.

Significant improvements with respect to the state of the art are achieved with the system for extracting potential and kinetic energy from sea waves proposed herein.

A completely autonomous system, specially designed for being coupled to any offshore platform, where there is a demand for electric current that is usually generated by means of generator sets that depend on fuel supply usually transported by means of tankers, is thus obtained. The system for extraction defined herein provides all the required energy to these structures without having to depend on external supply, so it is much more profitable. Since no underwater cables are needed, given that all wiring is internal, costs as well as wear and maintenance problems are reduced.

Since the system is a suspended system, only the buoy is in contact with the sea, the rest of the mechanisms thereof being outside the water, and it therefore prevents lichens or other underwater elements from sticking thereon, allows visual operation inspection, allows preventing leaks or failures that are harder to detect as a result of being submerged and makes maintenance tasks easier.

As modules can be formed with three extraction units arranged in a triangle, it is a very effective system when the orientation of the attack of the waves cannot be determined, given that the system is capable of harnessing energy 360° which will allow it to harness the maximum amount of energy regardless of the direction of attack of the wave.

By having a closed circuit pumping mechanism, the present invention has several advantages such as the fact that, by using a lubricant and an antioxidant, the maintenance of the elements working under friction is assured. Furthermore, it does not depend on the supply of operating liquid.

On the other hand, the automatic adjustment mechanism for adjusting the height and waterline of the buoy allows modifying the height thereof with respect to the buoyancy level of the waves, in order to be able to optimize system performance, regardless of the change in height of the waves and tides.

## Claims

1. System located in offshore marine constructions (13) for extracting potential and kinetic energy from sea waves, of the type having an operation based on a piston (2) causing the movement of a pressurized liquid (36) through a turbine (10), said system comprises:
- at least one extraction unit (1) comprising a supporting structure (3) suspended from the marine construction (13), fixed at the top to a first holding platform (5.1), and an energy-generating mechanism (7) located inside the supporting structure (3),
- where the energy-generating mechanism (7) comprises a half-submerged buoy (8) in the lower part thereof connected by means of a frame (9) to a closed-circuit pumping mechanism,
- where the suspended supporting structure (3) has an automatic adjustment mechanism for adjusting the height and waterline of the buoy (8) which keeps the rest of the energy-generating mechanism (7) above sea level, by means of the displacement of the first holding platform (5.1) with respect to a second supporting platform (5.2) which is located above the first holding platform (5.1) and fixed at the top to the marine construction (13);
**characterized in that:**
- said suspended supporting structure (3) is closed at the bottom by means of a lower base (6), and comprises a series of tubular bodies (4) arranged around a central area;
- the system further comprises the turbine (10) and respective accumulator tank (11) and regulator tank (12) of the system connected to the closed-circuit pumping mechanism of the at least one extraction unit (1) and located on the second machine supporting platform (5.2);
- and wherein the automatic adjustment mechanism for adjusting the height and waterline of the buoy (8) comprises a series of guide elements (14) fixed at the top to the second supporting platform (5.2) and each of them being located inside one of the tubular bodies (4) of the supporting structure (3), where at least two of said guide elements (14) are furthermore threading elements (14.1) to be threaded on the corresponding tubular bodies (4) and where said threading elements (14.1) comprise in the upper part thereof gears (15) interconnected with one another and with a central gear (16) by means of a first transmission chain (17.1), where the central gear (16) is connected to a motor (18) of the system controlled by a program for automatically adjusting the buoyancy of the buoy (8).

2. System for extracting potential and kinetic energy from sea waves according to claim 1, **characterized in that** the closed-circuit pumping mechanism comprises a vertical piston (2) secured by means of a bearing (19) to a push rod (20) fixed to the upper part of the frame (9) connected to the buoy (8), where the movement of the buoy (8) and the frame (9) displace the push rod (20) which in turn displaces the piston (2) inside a pressurized chamber (21) by means of a first upward movement which causes the pressurized chamber (21) to be filled up with the liquid (36) from the regulator tank (12) to which it is connected by first connection means, and a second downward movement causing the pressurized chamber (21) to be emptied by discharging the liquid (36) to the accumulator tank (11) through second connection means, where said tanks (11, 12) are connected to one another by means of a control valve (24) controlling the passage of the liquid (36) from the accumulator tank (11) to the regulator tank (12) through the turbine (10).

3. System for extracting potential and kinetic energy from sea waves according to claim 2, **characterized in that** the first and second connection means between the pressurized chamber (21) and the regulator tank (12) and accumulator tank (11), respectively, comprise respective hoses (25.1, 25.2) each connected to the corresponding tank, respective rigid pipes (26.1, 26.2) connecting, in each case, one of said hoses (25.1, 25.2) to an inlet and outlet duct (27) of the pressurized chamber (21) and, respective check valves, where the valve (28.1) connected in the first connection means allows circulation of the liquid (36) to the pressurized chamber (21) and the valve (28.2) connected in the second connection means allows circulation to the accumulator tank (12).

4. System for extracting potential and kinetic energy from sea waves according to any of the preceding claims, **characterized in that** the displacement of the buoy (8) comprises guiding means of the energy-generating mechanism (7).

5. System for extracting potential and kinetic energy from sea waves according to claim 4, **characterized in that** the guiding means for guiding the movement of the energy-generating mechanism (7) comprise side bearings (29) for guiding the buoy (8) with respect to the supporting structure (3) and guide rings (30) of the frame (9) thereof.

6. System for extracting potential and kinetic energy from sea waves according to any of claims 4 and 5, **characterized in that** the guiding means for guiding the movement of the energy-generating mechanism (7) comprise a cylindrical space in the central area of the push rod (20) with a guide rod (31), secured to the first holding platform (5.1), sliding therein.

7. System for extracting potential and kinetic energy from sea waves according to any of the preceding claims, **characterized in that** the energy-generating mechanism (7) comprises securing means formed by clamps (32) for securing to the supporting structure (3).

8. System for extracting potential and kinetic energy from sea waves according to any of the preceding claims, **characterized in that** the extraction unit (1) comprises safety means formed by dampeners (33) located in the lower base (6) of the supporting structure (3), in the area of contact thereof with the buoy (8) and, on a support surface (34) fixed in the lower part of the pressurized chamber (21) of the piston (2), in the area of contact thereof with the buoy (8).

9. System for extracting potential and kinetic energy from sea waves according to any of the preceding claims, **characterized in that** the supporting structure (3) of the extraction unit (1) comprises six tubular bodies (4) arranged in the shape having a hexagonal section.

10. System for extracting potential and kinetic energy from sea waves according to any of the preceding claims, **characterized in that** it comprises at least one independent module (35), formed by three extraction units (1) arranged in a triangle, where the central gears (16) of said three extraction units (1) are connected by a second transmission chain (17.2), one of said central gears (16) being connected to the motor (18) controlled by a program for automatically adjusting the buoyancy of the buoy (8).

11. System for extracting potential and kinetic energy from sea waves according to any of the preceding claims, **characterized in that** the turbine (10) of the system is connected to energy storage means.

12. System for extracting potential and kinetic energy from sea waves according to any of claims 1 to 10, **characterized in that** the turbine (10) of the system is connected to a nearby power grid.

13. System for extracting potential and kinetic energy from sea waves according to any of the preceding claims, **characterized in that** the liquid (36) of the closed-circuit pumping mechanism is a lubricant and an antioxidant.

## Patentansprüche

1. System, das in Meereskonstruktionen (13) auf offener See angeordnet ist, zum Extrahieren potentieller und kinetischer Energie aus Meereswellen, das von der Art ist, die einen Betrieb hat, der auf einem Kolben (2) basiert, der die Bewegung einer unter Druck stehenden Flüssigkeit (36) durch eine Turbine (10) bewirkt, wobei das System aufweist:
- wenigstens eine Extraktionseinheit (1), die eine Haltestruktur (3), die von der Meereskonstruktion (13) aufgehängt ist, die an der Oberseite einer ersten Halteplattform (5.1) befestigt ist, und einen Energieerzeugungsmechanismus (7), der im Inneren der Haltestruktur (3) angeordnet ist, aufweist,
- wobei der Energieerzeugungsmechanismus (7) einen halb eingetauchten Schwimmkörper (8) in seinem unteren Teil aufweist, der mittels eines Rahmens (9) mit einem Pumpmechanismus mit geschlossenem Kreislauf verbunden ist,
- wobei die aufgehängte Haltestruktur (3) einen automatischen Einstellmechanismus zum Einstellen der Höhe und Wasserlinie des Schwimmkörpers (8) hat, der den Rest des Energieerzeugungsmechanismus (7) mittels der Verschiebung der ersten Halteplattform (5.1) in Bezug auf eine zweite Halteplattform (5.2), die über der ersten Halteplattform (5.1) angeordnet ist und an der Oberseite der Meereskonstruktion (13) befestigt ist, über Meereshöhe hält;
**dadurch gekennzeichnet, dass**:
- die aufgehängte Haltestruktur (3) an der Unterseite mittels einer unteren Basis (6) geschlossen ist und eine Reihe rohrförmiger Körper (4) aufweist, die um einen Mittelbereich herum angeordnet sind;
- das System ferner die Turbine (10) und entsprechende Sammelbehälter (12) und Regulierungsbehälter (12) des Systems, die mit dem Pumpmechanismus mit geschlossenem Kreislauf der wenigstens einen Extraktionseinheit (1) verbunden sind und auf der zweiten Vorrichtungshalteplattform (5.2) angeordnet sind, aufweist;
- und wobei der automatische Einstellmechanismus zum Anpassen der Höhe und Wasserlinie des Schwimmkörpers (8) eine Reihe von Führungselementen (14), die an der Oberseite der zweiten Halteplattform (5.2) befestigt sind, aufweist, und wobei jeders von ihnen im Inneren eines der rohrförmigen Körper (4) der Haltestruktur (3) angeordnet ist, wobei wenigstens zwei der Führungselemente (14) ferner Gewindeelemente (14.1) sind, die auf entsprechende rohrförmige Körper (4) geschraubt werden sollen, und wobei die Gewindeelemente (14.1) in ihrem oberen Teil Zahnräder (15) aufweisen, die miteinander und mit einem zentralen Zahnrad (16) mittels einer ersten Übertragungskette (17.1) verbunden sind, wobei das zentrale Zahnrad (16) mit einem Motor (18) des Systems verbunden ist, der von einem Programm zum automatischen Einstellen des Auftriebs des Schwimmkörpers (8) gesteuert wird.

2. System zum Extrahieren potentieller und kinetischer Energie aus Meereswellen nach Anspruch 1, **dadurch gekennzeichnet, dass** der Pumpmechanismus mit geschlossenem Kreislauf einen vertikalen Kolben (2) aufweist, der mittels eines Lagers (19) an einer Schubstange (20) befestigt, die an dem oberen Teil des mit dem Schwimmkörper (8) verbundenen Rahmens (9) befestigt ist, wobei die Bewegung des Schwimmkörpers (8) und des Rahmens (9) die Schubstange (20) verschiebt, es wiederum den Kolben (2) im Inneren einer unter Druck stehenden Kammer (21) verschiebt mittels einer ersten Aufwärtsbewegung, die bewirkt, dass eine unter Duck stehende Kammer (21) mit der Flüssigkeit (36) aus dem Regulierungsbehälter (12), mit dem sie durch erste Verbindungseinrichtungen verbunden ist, aufgefüllt wird, und einer zweiten Abwärtsbewegung, die bewirkt, dass die unter Druck stehende Kammer (21) durch Abgeben der Flüssigkeit (36) durch zweite Verbindungseinrichtungen an den Sammelbehälter (11) entleert wird, wobei die Behälter (11, 12) mittels eines Steuerventils (24), das den Durchgang der Flüssigkeit (36) von dem Sammelbehälter (11) durch die Turbine (10) zu dem Regulierungsbehälter (12) steuert, miteinander verbunden sind.

3. System zum Extrahieren potentieller und kinetischer Energie aus Meereswellen nach Anspruch 2, **dadurch gekennzeichnet, dass** die erste und zweite Verbindungseinrichtung zwischen der unter Druck stehenden Kammer (21) und dem Regulierungsbehälter (12) und dem Sammelbehälter (11) jeweils aufweisen: jeweilige Schläuche (25.1, 25.2), die jeweils mit dem entsprechenden Behälter verbunden sind, jeweilige starre Leitungen (26.1, 26.2), die in jedem Fall einen der Schläuche (25.1, 25.2) mit einem Einlass- und Auslasskanal (27) der unter Druck stehenden Kammer (21) verbinden und jeweilige Rückschlagventile, wobei das Ventil (28.1), das in der ersten Verbindungseinrichtung verbunden ist, die Zirkulation der Flüssigkeit (36) zu der unter Druck stehenden Kammer (21) ermöglicht, und das Ventil (28.2), das in der zweiten Verbindungseinrichtung verbunden ist, die Zirkulation der Flüssigkeit zu dem Sammelbehälter (12) ermöglicht.

4. System zum Extrahieren potentieller und kinetischer Energie aus Meereswellen nach einem der vorhergehenden Ansprüche, **dadurch gekennzeichnet, dass** die Verschiebung des Schwimmkörpers (8) Führungseinrichtungen des Energieerzeugungsmechanismus (7) aufweist.

5. System zum Extrahieren potentieller und kinetischer Energie aus Meereswellen nach Anspruch 4, **dadurch gekennzeichnet, dass** die Führungseinrichtungen zum Führen der Bewegung des Energieerzeugungsmechanismus (7) Seitenlager (29) zum Führen des Schwimmkörpers (8) in Bezug auf die Haltestruktur (3) und Führungsringe (30) ihres Rahmens (9) aufweisen.

6. System zum Extrahieren potentieller und kinetischer Energie aus Meereswellen nach einem der Ansprüche 4 und 5, **dadurch gekennzeichnet, dass** die Führungseinrichtungen zum Führen der Bewegung des Energieerzeugungsmechanismus (7) einen zylindrischen Raum in dem mittleren Bereich der Schubstange (20) aufweisen, wobei eine Führungsstange (31), die an der ersten Halteplattform (5.1) befestigt ist, darin gleitet.

7. System zum Extrahieren potentieller und kinetischer Energie aus Meereswellen nach einem der vorhergehenden Ansprüche, **dadurch gekennzeichnet, dass** der Energieerzeugungsmechanismus (7) Befestigungseinrichtungen aufweist, die durch Kammern (32) zum Befestigen der Haltestruktur (3) ausgebildet sind.

8. System zum Extrahieren potentieller und kinetischer Energie aus Meereswellen nach einem der vorhergehenden Ansprüche, **dadurch gekennzeichnet, dass** die Extraktionseinheit (1) Sicherheitseinrichtungen aufweist, die durch Dämpfer (33) ausgebildet sind, die in der unteren Basis (6) der Haltestruktur (3) in dem Bereich ihres Kontakts mit dem Schwimmkörper (8) und auf einer Halteoberfläche (34), die in dem unteren Teil der unter Druck stehenden Kammer (21) des Kolbens (2) befestigt ist, in ihrem Kontaktbereich mit dem Schwimmkörper (8) angeordnet sind.

9. System zum Extrahieren potentieller und kinetischer Energie aus Meereswellen nach einem der vorhergehenden Ansprüche, **dadurch gekennzeichnet, dass** die Haltestruktur (3) der Extraktionseinheit (1) sechs rohrförmige Körper (4) aufweist, die in der Form mit hexagonalem Schnitt angeordnet sind.

10. System zum Extrahieren potentieller und kinetischer Energie aus Meereswellen nach einem der vorhergehenden Ansprüche, **dadurch gekennzeichnet, dass** es wenigstens ein unabhängiges Modul (35) aufweist, das durch drei Extraktionseinheiten (1) ausgebildet wird, die in einem Dreieck angeordnet sind, wobei die zentralen Zahnräder (16) der drei Extraktionseinheiten (1) durch eine zweite Übertragungskette (17.2) verbunden sind, wobei eines der zentralen Zahnräder (16) mit dem Motor (18) verbunden ist, der durch ein Programm zum automatischen Anpassen des Auftriebs des Schwimmkörpers (8) gesteuert wird.

11. System zum Extrahieren potentieller und kinetischer Energie aus Meereswellen nach einem der vorhergehenden Ansprüche, **dadurch gekennzeichnet, dass** die Turbine (10) des Systems mit Energiespeichereinrichtungen verbunden ist.

12. System zum Extrahieren potentieller und kinetischer Energie aus Meereswellen nach einem der Ansprüche 1 bis 10, **dadurch gekennzeichnet, dass** die Turbine (10) des Systems mit einem nahegelegenen Energieversorgungsnetz verbunden ist.

13. System zum Extrahieren potentieller und kinetischer Energie aus Meereswellen nach einem der vorhergehenden Ansprüche, **dadurch gekennzeichnet, dass** die Flüssigkeit (36) des Pumpmechanismus mit geschlossenem Kreislauf ein Schmiermittel und ein Antioxidationsmittel ist.

## Revendications

1. Système situé dans des constructions marines (13) en mer pour extraire de l'énergie potentielle et cinétique des vagues de la mer, du type ayant un fonctionnement basé sur un piston (2) entraînant le mouvement d'un liquide (36) sous pression à travers une turbine (10), ledit système comprenant :
- au moins une unité d'extraction (1) comprenant une structure de support (3) suspendue à la construction marine (13), fixée au niveau du sommet à une première plateforme de maintien (5.1), et un mécanisme de génération d'énergie (7) situé à l'intérieur de la structure de support (3),
- où le mécanisme de génération d'énergie (7) comprend une bouée (8) semi-immergée dans la partie inférieure de celui-ci reliée à l'aide d'un cadre (9) à un mécanisme de pompage à circuit fermé,
- où la structure de support (3) suspendue comporte un mécanisme d'ajustement automatique pour ajuster la hauteur et la ligne d'eau de la bouée (8) qui maintient le reste du mécanisme de génération d'énergie (7) au-dessus du niveau de la mer, au moyen du déplacement de la première plateforme de maintien (5.1) par rapport à une seconde plateforme de support (5.2) qui se situe au-dessus de la première plateforme de maintien (5.1) et est fixée au niveau du sommet de la construction marine (13) ;
**caractérisé en ce que** :
- ladite structure de support (3) suspendue est fermée au niveau du fond au moyen d'une base inférieure (6), et comprend une série de corps tubulaires (4) agencés autour d'une zone centrale ;
- le système comprend en outre la turbine (10) et des réservoir accumulateur (11) et réservoir régulateur (12) respectifs du système reliés au mécanisme de pompage à circuit fermé de l'au moins une unité d'extraction (1) et situés sur la seconde plateforme de support (502) de machine ;
- et dans lequel le mécanisme d'ajustement automatique destiné à ajuster la hauteur et la ligne d'eau de la bouée (8) comprend une série d'éléments de guidage (14) fixés au niveau du sommet à la seconde plateforme de support (5.2) et chacun d'eux étant situé à l'intérieur de l'un des corps tubulaires (4) de la structure de support (3), où au moins deux desdits éléments de guidage (14) sont en outre des éléments de filetage (14.1) à fileter sur les corps tubulaires (4) correspondants et où lesdits éléments de filetage (14.1) comprennent dans la partie supérieure de ceux-ci des engrenages (15) interconnectés entre eux et avec un engrenage central (16) à l'aide d'une première chaîne de transmission (17.1), où l'engrenage central (16) est relié à un moteur (18) du système commandé par un programme pour ajuster automatiquement la flottabilité de la bouée (8).

2. Système pour extraire de l'énergie potentielle et cinétique de vagues de mer selon la revendication 1, **caractérisé en ce que** le mécanisme de pompage à circuit fermé comprend un piston (2) vertical fixé à l'aide d'un palier (19) à une tige de poussée (20) fixée à la partie supérieure du cadre (9)reliée à la bouée (8), où le mouvement de la bouée (8) et le cadre (9) déplacent la tige de poussée (20) qui à son tour déplace le piston (2) à l'intérieur d'une chambre sous pression (21) à l'aide d'un premier mouvement vers le haut qui entraîne le remplissage de la chambre sous pression (21) avec le liquide (36) provenant du réservoir régulateur (12) auquel elle est reliée par un premier moyen de liaison, et d'un second mouvement vers le bas entraînant le vidage de la chambre sous pression (21) en évacuant le liquide (36) vers le réservoir accumulateur (11) par l'intermédiaire d'un second moyen de liaison, où lesdits réservoirs (11, 12) sont reliés entre eux à l'aide d'un clapet de commande (24) commandant le passage du liquide (36) du réservoir accumulateur (11) vers le réservoir régulateur (12) par l'intermédiaire de la turbine (10).

3. Système pour extraire de l'énergie potentielle et cinétique de vagues de mer selon la revendication 2, **caractérisé en ce que** les premier et second moyens de liaison entre la chambre sous pression (21) et le réservoir régulateur (12) et le réservoir accumulateur (11), respectivement, comprennent des tuyaux (25.1, 25.2) respectifs reliés chacun au réservoir correspondant, des tubes rigides (26.1, 26.2) respectifs reliant, dans chaque cas, l'un desdits tuyaux (25.1, 25.2) à un conduit d'entrée et de sortie (27) de la chambre sous pression (21) et, des clapets de retenue respectifs, où le clapet (28.1) relié dans le premier moyen de liaison permet la circulation du liquide (36) vers la chambre sous pression (21) et le clapet (28.2) relié dans le second moyen de liaison permet la circulation vers le réservoir accumulateur (12).

4. Système pour extraire de l'énergie potentielle et cinétique de vagues de mer selon l'une quelconque des revendications précédentes, **caractérisé en ce que** le déplacement de la bouée (8) comprend un moyen de guidage du mécanisme de génération d'énergie (7).

5. Système pour extraire de l'énergie potentielle et cinétique de vagues de mer selon la revendication 4, **caractérisé en ce que** le moyen de guidage pour guider le mouvement du mécanisme de génération d'énergie (7) comprend des paliers latéraux (29) pour guider la bouée (8) par rapport à la structure de support (3) et des bagues de guidage (30) du cadre (9) de celui-ci.

6. Système pour extraire de l'énergie potentielle et cinétique de vagues de mer selon l'une quelconque des revendications 4 et 5, **caractérisé en ce que** le moyen de guidage pour guider le mouvement du mécanisme de génération d'énergie (7) comprend un espace cylindrique dans la zone centrale de la tige de poussée (20) avec une tige de guidage (31), fixée à la première plateforme de maintien (5.1), coulissant dans celui-ci.

7. Système pour extraire de l'énergie potentielle et cinétique de vagues de mer selon l'une quelconque des revendications précédentes, **caractérisé en ce que** le mécanisme de génération d'énergie (7) comprend un moyen de fixation formé par des pinces (32) pour fixation à la structure de support (3).

8. Système pour extraire de l'énergie potentielle et cinétique de vagues de mer selon l'une quelconque des revendications précédentes, **caractérisé en ce que** l'unité d'extraction (1) comprend des moyens de sécurité formés par des amortisseurs (33) situés dans la base inférieure (6) de la structure de support (3), dans la zone de contact de celle-ci avec la bouée (8) et, sur une surface de support (34) fixée dans la partie inférieure de la chambre sous pression (21) du piston (2), dans la zone de contact de celle-ci avec la bouée (8).

9. Système pour extraire de l'énergie potentielle et cinétique de vagues de mer selon l'une quelconque des revendications précédentes, **caractérisé en ce que** la structure de support (3) de l'unité d'extraction (1) comprend six corps tubulaires (4) agencés selon la forme ayant une section hexagonale.

10. Système pour extraire de l'énergie potentielle et cinétique de vagues de mer selon l'une quelconque des revendications précédentes, **caractérisé en ce qu'**il comprend au moins un module indépendant (35), formé par trois unités d'extraction (1) agencées en un triangle, où les engrenages centraux (16) desdites trois unités d'extraction (1) sont reliés par une seconde chaîne de transmission (17.2), l'un desdits engrenages centraux (16) étant relié au moteur (18) commandé par un programme pour ajuster automatiquement la flottabilité de la bouée (8).

11. Système pour extraire de l'énergie potentielle et cinétique de vagues de mer selon l'une quelconque des revendications précédentes, **caractérisé en ce que** la turbine (10) du système est reliée à des moyens de stockage d'énergie.

12. Système pour extraire de l'énergie potentielle et cinétique de vagues de mer selon l'une quelconque des revendications 1 à 10, **caractérisé en ce que** la turbine (10) du système est reliée à un réseau électrique voisin.

13. Système pour extraire de l'énergie potentielle et cinétique de vagues de mer selon l'une quelconque des revendications précédentes, **caractérisé en ce que** le liquide (36) du mécanisme de pompage à circuit fermé est un lubrifiant et un antioxydant.
